# FASCICULE DE BREVET EUROPEEN

(11) **EP 3 195 638 B1**
(45) Date de publication et mention de la délivrance du brevet: **04.07.2018**
(21) Numéro de dépôt: 15805559.0
(22) Date de dépôt: 14.09.2015
(51) Int. Cl.: H04W 8/18, H04W 60/00

(54) **PROCÉDÉ D'ADMINISTRATION DE CYCLES DE VIE DE PROFILS DE COMMUNICATION**
VERFAHREN ZUR VERABREICHUNG VON LEBENSZYKLEN VON KOMMUNIKATIONSPROFILEN
METHOD FOR ADMINISTERING LIFE CYCLES OF COMMUNICATION PROFILES

(30) Priorité: 15.09.2014 FR 1458634
(43) Date de publication de la demande: 26.07.2017
(73) Titulaire: IDEMIA France, 92700 Colombes (FR)
(72) Inventeur: WOZNIAK, Tomasz, 92700 Colombes (FR); DUMOULIN, Jérôme, 92700 Colombes (FR)
(74) Mandataire: Perrot, Emilie
(86) Numéro de dépôt international: PCT/FR2015/052445
(87) Numéro de publication internationale: WO 2016/042241

(56) Documents cités:
- US-A1- 2013 152 159
- "Reprogrammable SIMs: Technology, Evolution and Implications Final Report", , 25 septembre 2012 (2012-09-25), pages 1-95, XP055126567, Extrait de l'Internet: URL:http://stakeholders.ofcom.org.uk/binar ies/research/telecoms-research/reprogramma ble-sims.pdf [extrait le 2014-07-02]
- "Smart Cards; Embedded UICC; Requirements Specification (Release 12);ETSI TS 103 383", ETSI DRAFT; ETSI TS 103 383, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP - SCP-WG-R, no. V12.5.0, 15 août 2014 (2014-08-15), pages 1-25, XP014189517,
- "Smart Cards; Embedded UICC; Technical Specification (Release 12);Draft_SCPTEC(13)000114r6_Draft_TS_103_ 384_v0_8_0_eUICC_REMARKS", ETSI DRAFT; DRAFT_SCPTEC(13)000114R6_DRAFT_TS_103_384_ V0_8_0_EUICC_REMARKS, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP, no. V0.8.0, 11 juillet 2014 (2014-07-11), pages 1-17, XP014183968,
- "ISO/IEC 7816-4: Identification cards - Integrated circuit cards - Part 4: Organization, security and commands for interchange", , 15 janvier 2005 (2005-01-15), pages 1-90, XP055187603, Extrait de l'Internet: URL:http://www.embedx.com/pdfs/ISO_STD_781 6/info_isoiec7816-4{ed2.0}en.pdf [extrait le 2015-05-06]

## Description

### Arrière-plan de l'invention

La présente invention porte sur un procédé d'administration de cycles de vie de profils de communication gérés par un module d'identité de souscripteur embarqué ou inséré dans un terminal de télécommunications.

De façon connue, les terminaux de télécommunications sans fil, tels que les téléphones mobiles ou équivalents par exemple, sont conçus pour coopérer avec un module d'identité de souscripteur à un réseau de téléphonie mobile, dit aussi UICC (pour « Universal Integrated Circuit Chip », ou module UICC, afin de pouvoir communiquer avec un réseau de télécommunications donné.

Un module UICC peut prendre la forme d'une carte SIM pouvant être insérée dans un terminal de télécommunications adapté. Cette carte SIM comprend un ensemble de fichiers dénommé « données de personnalisation » ou « profil de communication » comportant des données de souscription permettant l'accès au réseau, notamment une clé et un identifiant unique IMSI (pour « *International Mobile Subscriber Identity*») associé à une souscription particulière d'un utilisateur avec un opérateur de téléphonie mobile associé. Un tel profil de communication est standardisé.

Ce profil est stocké de façon permanente dans une mémoire morte de la carte SIM de sorte que la carte SIM ne soit pas reprogrammable. Cela permet en particulier de réduire les risques de fraudes vis-à-vis de l'identité de l'utilisateur en rendant plus difficile la modification ou la duplication de la carte SIM ou de ses données de souscription.

Par conséquent, la seule manière pour un utilisateur de changer d'opérateur de téléphonie mobile est généralement de remplacer manuellement dans son téléphone portable sa carte SIM actuelle par une nouvelle carte SIM émise par un nouvel opérateur de son choix. Cette nouvelle carte SIM contient les données de souscription nécessaires pour accéder au réseau et aux services propres au nouvel opérateur.

Le module UICC peut aussi prendre la forme d'un module d'identité de souscripteur embarqué (appelé aussi module eUICC), permettant à son utilisateur de changer d'opérateur sans avoir à remplacer physiquement ce module eUICC dans le terminal de télécommunications. Ces modules eUICC, plus récents, sont définis dans le document ETSI TS 103 383 intitulé « SmartCards, embedded UICC, Requirements Spécification » daté d'avril 2014 (version 12.4.0). Ce document, dressé par l'organisme ETSI (pour « *European Télécommunications Standards Institute* »), définit un module eUICC comme un élément matériel sécurisé de petite taille, qui n'est pas facilement accessible ou remplaçable, et qui permet de basculer d'un profil à un autre de manière sécurisée.

Ce module eUICC est apte à contenir une pluralité de profils de communication, chaque profil de communication permettant, lorsque ce profil de communication est actif, au terminal d'accéder de façon sécurisée au réseau d'un opérateur et aux services définis par le profil en question. Il est ainsi possible de changer d'opérateur ou de modifier l'accès à des services en changeant le profil de communication actif dans le module eUICC.

L'installation, la désinstallation, l'activation et/ou la désactivation d'un profil de communication est effectuée au moyen d'une méthode d'administration du cycle de vie d'un profil. Cette méthode peut aussi permettre d'administrer les fichiers des profils de communication et le basculement d'un profil à un autre.

Il existe différentes méthodes d'administration du cycle de vie d'un profil de communication. Chacune de ces méthodes peut utiliser une ou plusieurs commandes spécifiques, qu'une autre méthode peut ne pas supporter. En effet, les commandes de type « GSMA » et « ETSI » ne sont actuellement pas uniformes. D'autres méthodes, telles que celles divulguées dans la demande US 2012 0221 292 ne sont pas standardisées. De plus, une même commande peut être interprétée de façon différente en fonction de la méthode d'administration considérée (c'est-à-dire selon des règles différentes).

Il existe ainsi des problèmes de compatibilité entre un module et un terminal lorsque ce module et ce terminal ne supportent pas une même méthode d'administration du cycle de vie d'un profil de communication, cette non compatibilité pouvant engendrer des erreurs de fonctionnement du module et/ou du terminal.

Un des objectifs de l'invention est d'éviter de tels problèmes de compatibilité.

Les documents « Reprogrammable SIMs: Technology, Evolution and Implications Final Report », 25 septembre 2012, pages 1-95, XP055126567, et « Smart Cards; Embedded UICC; Technical Spécification (Release 12)", ETSI DRAFT TS 103 384, V0.8.0, 11 juillet 2014, XP014183968, décrivent des modules eUICC.

Le document « ISO/IEC 7816-4: Identification card - Integrated circuit cards - Part 4: Organisation, security and commands for interchange », 15 Janvier 2005, pages 1-90, XP055187603 décrit l'organisation, la sécurité et les commandes utilisées pour les échanges par des cartes à circuit intégré.

Le document US 2013/0152159 décrit un procédé de gestion d'un cycle de vie d'un module de sécurité.

### Objet et résumé de l'invention

A cet effet, la présente invention concerne un procédé d'administration de cycles de vie de profils de communication, les profils étant gérés par un module d'identité de souscripteur embarqué dans un terminal de télécommunications, le procédé étant mis en oeuvre par le module,
chaque profil étant configuré pour permettre au terminal de communiquer avec un réseau de téléphonie mobile conformément au profil de communication lorsque le profil de communication est actif,
ledit module étant apte à utiliser au moins une méthode d'administration, la méthode étant apte à administrer les cycles de vie de chacun des profils, la méthode utilisant un ensemble d'au moins une commande et/ou d'au moins une règle,
le procédé comprenant les étapes de :
- réception d'un message émis par le terminal et étant représentatif des capacités du terminal,
- sélection ou non sélection de l'ensemble utilisé par la méthode, en fonction des capacités du terminal, et
- si l'ensemble est sélectionné, administration d'au moins un cycle de vie d'au moins un des profils en utilisant l'ensemble d'au moins une commande et/ou d'au moins une règle.

Ainsi, le module choisit un ensemble d'au moins une commande et/ou d'au moins une règle permettant l'administration d'au moins un cycle de vie d'au moins un des profils en fonction des capacités du terminal.

L'invention supporte plusieurs cas particuliers :
- soit le message émis par le terminal comprend explicitement la capacité du terminal à supporter la méthode d'administration supportée par le module,
- soit le message émis par le terminal comprend implicitement la capacité du terminal à supporter la méthode d'administration supportée par le module et le module déduit du contenu du message cette capacité.

Dans le second cas (message comprenant implicitement la capacité du terminal) :
- soit le message ne comprend aucune information relative à la capacité du terminal à supporter la méthode d'administration supportée par le module et le module en déduit que le terminal ne supporte pas cette méthode d'administration,
- soit le module déduit des capacités transmises via le message émis par le terminal la capacité du terminal à supporter la méthode d'administration supportée par le module.

Dans un mode de réalisation particulier, le message émis par le terminal comprend explicitement la capacité du terminal à utiliser (ou supporter) la méthode.

Dans un mode de réalisation particulier, l'étape de sélection ou de non sélection de l'ensemble est en outre fonction des capacités du module.

Dans un mode de réalisation particulier, le procédé comprend en outre les étapes de :
- réception d'une commande de sélection d'un profil émise par le terminal, et
- sélection d'un des profils.

Dans un mode de réalisation particulier, le profil de communication est sélectionné selon une règle de sélection prédéfinie, mémorisée dans une mémoire non volatile du module.

Dans un mode de réalisation particulier, la règle de sélection de profil est l'une parmi les règles suivantes :
- sélection du dernier profil de communication du module ayant été activé,
- sélection d'un profil de communication prioritaire dans une liste mémorisée dans le module,
- sélection de l'unique profil de communication du module d'identité de souscripteur embarqué, ou
- sélection d'un profil de communication indiqué dans la commande de sélection d'un profil de communication.

Dans un mode de réalisation particulier, le procédé comprend en outre une étape d'émission d'un message au terminal comportant une information relative aux capacités du module.

Dans un mode de réalisation particulier, le message comportant une information relative aux capacités du module comporte :
- une information sur la méthode d'administration utilisée par le module, et/ou
- le nombre de profils de communication stockés dans le module, et/ou
- le type de système de fichiers supporté par le module, et/ou
- une information relative au profil de communication sélectionné.

Dans un mode de réalisation particulier, le message comportant une information relative aux capacités dudit module correspond à au moins un objet de type « BER-TLV » défini par la norme « ISO 7816-4 » ou par la norme « ETSI TS 102.221 ».

La présente invention porte également sur un procédé d'administration de cycles de vie de profils de communication, les profils étant supportés par un terminal de télécommunications apte à coopérer avec un module d'identité de souscripteur embarqué ou inséré dans le terminal, le procédé étant mis en oeuvre par le terminal,
chaque profil étant configuré pour permettre au terminal de communiquer avec un réseau de téléphonie mobile conformément au profil de communication lorsque le profil de communication est actif,
le terminal étant apte à utiliser au moins une méthode d'administration, la méthode étant apte à administrer les cycles de vie de chacun des profils, la méthode utilisant un ensemble d'au moins une commande et/ou d'au moins une règle,
le procédé comportant les étapes suivantes :
- émission d'un message représentatif des capacités du terminal au module,
- réception d'un message comportant une information relative aux capacités du module, le message provenant du module,
- sélection ou non sélection de l'ensemble utilisé par la méthode, en fonction des capacités du module, et
- si l'ensemble est sélectionné, administration d'au moins un cycle de vie d'au moins un des profils en utilisant l'ensemble d'au moins une commande et/ou d'au moins une règle.

Dans un mode de réalisation particulier, le procédé est mis en oeuvre au premier démarrage du terminal de télécommunications.

Dans un mode de réalisation particulier, le procédé comprend en outre l'étape de :
- émission d'une commande de sélection d'un profil de communication au module.

Dans un mode de réalisation particulier, la commande de sélection d'un profil de communication est conforme à la commande APDU « Select FILE » définie par la norme « ISO 7816-4 ».

Dans un mode de réalisation particulier, le message émis par le terminal correspond à un message émis selon la commande APDU « Terminal Profile » définie par la norme « ETSI TS 102.221 », comportant en outre une donnée supplémentaire indiquant que le terminal est apte à supporter la méthode d'administration.

La présente invention porte également sur un module d'identité de souscripteur embarqué dans un terminal de télécommunications,
le module étant apte à gérer une pluralité de profils de communication,
chaque profil étant configuré pour permettre au terminal de communiquer avec un réseau de téléphonie mobile conformément au profil de communication lorsque le profil de communication est actif,
le module étant apte à utiliser au moins une méthode d'administration, la méthode étant apte à administrer les cycles de vie de chacun des profils, la méthode utilisant un ensemble d'au moins une commande et/ou d'au moins une règle,
le module comprenant :
- des moyens de réception d'un message émis par le terminal, le message étant représentatif des capacités du terminal, et
- des moyens de sélection ou de non sélection de l'ensemble utilisé par la méthode, en fonction des capacités du terminal, et
- des moyens d'administration d'au moins un cycle de vie d'au moins un des profils, utilisant l'ensemble d'au moins une commande et/ou d'au moins une règle, si ledit ensemble est sélectionné.

Dans un mode de réalisation particulier, les moyens de sélection ou de non sélection d'un ensemble sélectionnent l'ensemble en fonction en outre des capacités du module.

La présente invention porte également sur un terminal de télécommunications apte à coopérer avec un module d'identité de souscripteur embarqué ou inséré dans le terminal,
le terminal étant apte à supporter une pluralité de profils de communication,
chaque profil étant configuré pour permettre au terminal de communiquer avec un réseau de téléphonie mobile conformément au profil de communication lorsque le profil de communication est actif,
le terminal de télécommunications étant apte à utiliser au moins une méthode d'administration, la méthode étant apte à administrer les cycles de vie de chacun des profils, la méthode utilisant un ensemble d'au moins une commande et/ou d'au moins une règle,
le terminal comportant :
- des moyens d'émission d'un message représentatif des capacités du terminal au module,
- des moyens de réception d'un message comportant une information relative aux capacités du module, le message provenant du module, et
- des moyens de sélection ou de non sélection de l'ensemble utilisé par la méthode, en fonction des capacités du module, et
- des moyens d'administration d'au moins un cycle de vie d'au moins un des profils, utilisant l'ensemble d'au moins une commande et/ou d'au moins une règle, si ledit ensemble est sélectionné.

La présente invention porte également sur un programme d'ordinateur comportant des instructions pour l'exécution des étapes d'un procédé tel que défini ci-dessus, lorsque ledit programme est exécuté par un processeur.

La présente invention porte également sur un support d'enregistrement lisible par un processeur, sur lequel est enregistré un programme d'ordinateur comprenant des instructions pour l'exécution des étapes d'un procédé d'administration tel que défini ci-dessus.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de manière schématique, un module d'identité de souscripteur conforme à un mode de réalisation particulier de l'invention, ce module étant embarqué dans un terminal de télécommunications conforme à un mode de réalisation particulier de l'invention ;
- la figure 2 représente, de manière schématique, le module d'identité de souscripteur de la figure 1, ce module étant cette fois-ci embarqué dans un terminal de télécommunications classique ;
- la figure 3 représente, de manière schématique, le terminal de télécommunications de la figure 1, dans lequel un module d'identité de souscripteur classique est inséré ;
- les figures 4A et 4B représentent différentes configurations de profils de communication stockés dans le module de la figure 1 ;
- la figure 5 représente un registre stocké dans le module de la figure 1 ;
- la figure 6 représente, sous forme d'un ordinogramme, les principales étapes d'un procédé d'administration mis en oeuvre par le module et le terminal de la figure 1 ;
- la figure 7 représente, sous forme d'un ordinogramme, les principales étapes d'un procédé d'administration mis en oeuvre par le module de la figure 2 ; et
- la figure 8 représente, sous forme d'un ordinogramme, les principales étapes d'un procédé d'administration mis en oeuvre par le terminal de la figure 3.

### Description détaillée de plusieurs modes de réalisation

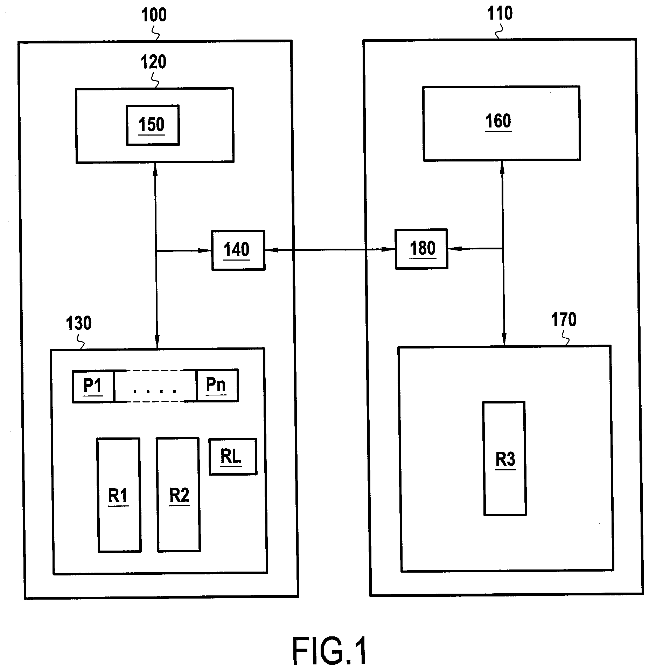

La **figure 1** représente un module 100 d'identité de souscripteur conforme à un mode de réalisation particulier de l'invention, ce module 100 d'identité de souscripteur étant embarqué dans un terminal 110 de télécommunications conforme à un mode de réalisation particulier de l'invention.

Dans l'exemple de la figure 1, le module 100 d'identité de souscripteur est une carte eUICC (pour « *embedded Universal Integrated Circuit Chip* »)*.* Cette carte eUICC est par exemple soudée ou intégrée dans le terminal 110.

Ce module est apte à gérer une pluralité de profils P1-Pn de communication. Chacun de ces profils P1-Pn comporte un cycle de vie, qui commence lors de l'installation de ce profil P1-Pn et qui finit lors de la désinstallation de ce profil P1-Pn. Durant ce cycle de vie, le profil est donc installé et désinstallé, mais aussi activé et désactivé. Les fichiers de ce profil peuvent en outre être administrés durant ce cycle de vie.

En outre, ce module 100 est apte à supporter, c'est-à-dire à utiliser, au moins une méthode d'administration de cycle de vie de profil, cette méthode étant apte à administrer les cycles de vie de chacun desdits profils P1-Pn. Cette méthode utilise un ensemble d'au moins une commande et/ou d'au moins une règle.

Par « méthode d'administration de cycle de vie de profil » on entend une méthode permettant l'installation, la désinstallation, d'activation, et la désactivation des profils de communication. Cette méthode peut aussi permettre l'administration des fichiers des profils de communication le basculement d'un profil à un autre.

La commande et/ou la règle utilisée par une méthode d'administration peut être non standardisée. Ainsi, une autre méthode d'administration peut ne pas mettre en oeuvre cette commande et/ou cette règle, et mettre en oeuvre une commande et/ou une règle différente.

Par « commande », on entend une commande informatique, c'est-à-dire un ordre d'exécution d'une tâche.

Par « règle », on entend une règle d'interprétation d'une commande reçue et de réponse à cette commande.

En outre, le terminal 110 est apte à supporter, c'est-à-dire à utiliser, au moins une méthode d'administration de cycles de vie de profils. Cette méthode peut être la même méthode que la méthode supportée par le module 100, ou une méthode différente.

Dans un exemple, une des méthodes d'administration est une méthode de type « enable/disable » ou une méthode utilisant un système de fichiers « d'administration » des profils utilisés par le terminal pour sélectionner des profils.

Dans un exemple, la commande et/ou la règle utilisée par une méthode d'administration concernent la création d'un protocole d'échange lors de l'activation d'un canal de sécurité. En effet, certains profils utilisent à cette fin des certificats, tandis que d'autres profils utilisent à cette fin des clés symétriques ou asymétriques.

Le module 100 comporte un système d'exploitation 120, par exemple stocké dans une mémoire morte. Le module d'identité de souscripteur 100 comporte en outre une mémoire non volatile réinscriptible 130 et une interface de communication 140.

Le système d'exploitation 120 comprend un module de gestion de profil 150.

Typiquement, la mémoire non volatile réinscriptible 130 est une mémoire de type « EEPROM » ou une mémoire de type « Flash ». Cette mémoire non volatile 130 comporte en outre la pluralité de profils P1-Pn de communication.

Chaque profil P1-Pn est un ensemble de fichiers configurés pour permettre au terminal de communiquer avec un réseau de téléphonie mobile associé à un opérateur de téléphonique particulier, lorsque ledit profil P1-Pn de communication est actif.

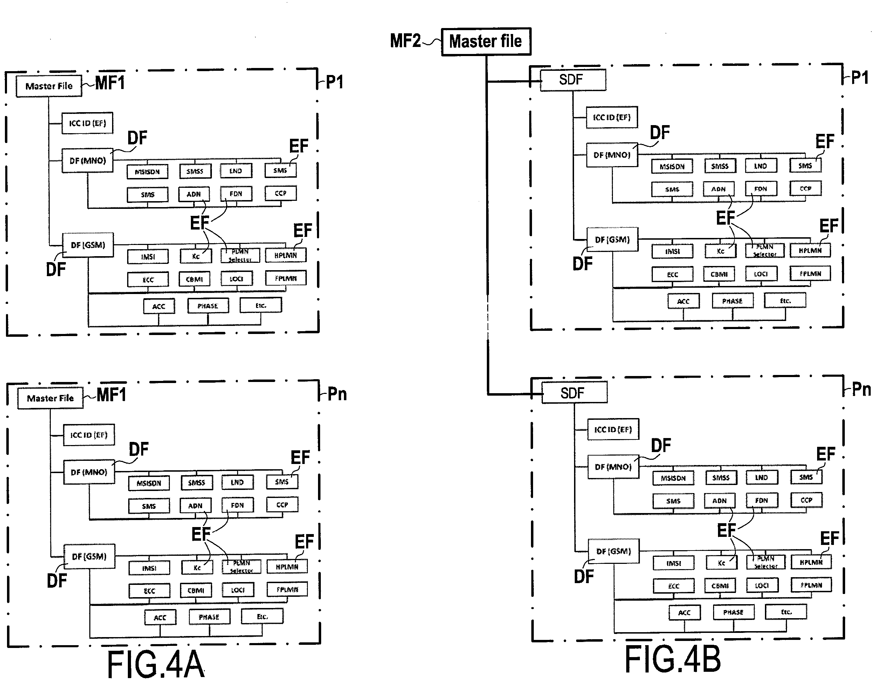

Dans un exemple, les profils P1-Pn sont organisés selon la configuration montrée en **figure 4A****.** Selon cette première configuration, chaque profil P1-Pn comprend :
- un répertoire principal MF1 (« Master File » en terminologie anglo-saxonne),
- des répertoires secondaires DF (« Dedicated Files » en terminologie anglo-saxonne), et
- des fichiers élémentaires EF (« Elementary Files » en terminologie anglo-saxonne).

Les fichiers élémentaires peuvent comporter notamment des données de souscription (e.g. identifiants (IMSI etc.), clés cryptographiques, algorithmes (e.g. d'authentification)...).

Dans un autre exemple, les profils P1-Pn sont organisés selon la configuration montrée en **figure 4B****.** Selon cette deuxième configuration, chaque profil P1-Pn comprend :
- un répertoire principal SDF (« SIM Dedicated File » en terminologie anglo-saxonne),
- des répertoires secondaires DF (« Dedicated Files » en terminologie anglo-saxonne), et
- des fichiers élémentaires EF (« Elementary Files » en terminologie anglo-saxonne).

Selon cette configuration, le répertoire principal SDF de chaque profil P1-Pn est un sous-répertoire d'un répertoire MF2 (« Master File » en terminologie anglo-saxonne), commun aux profils P1-Pn.

Les profils agencés selon la première configuration sont des profils d'un type différent du type de profil des profils agencés selon la deuxième configuration.

D'autres types de profils sont par exemple les profils « 2G », les profils « 3G », les profils « CDMA », ou un profil propre à un opérateur de téléphonie mobile.

Chaque méthode d'administration est apte à administrer le cycle de vie de chaque profil P1-Pn. Chaque méthode d'administration administre donc le cycle de vie de chaque profil P1-Pn, indépendamment du type de profil.

En variante, la mémoire non volatile 130 comporte un unique profil P1-Pn de communication.

Le module 150 est configuré pour réaliser la sélection d'un ou plusieurs profils P1-Pn de communication dans le module 100 à partir d'une règle de sélection prédéfinie d'un ensemble RL d'au moins une règle, contenu en mémoire non volatile réinscriptible 130 dans le module 100. La sélection est par exemple conforme à la norme 3GPP TS 31.102 (« Characteristics of the Universal Subscriber Identity Module application »)

Dans un exemple, les règles de l'ensemble RL sont les suivantes :
- sélection du dernier profil P1-Pn de communication du module 100 ayant été activé,
- sélection d'un profil P1-Pn de communication prioritaire dans une liste ou un premier registre R1 tel que défini ci-dessous,
- sélection de l'unique profil P1-Pn de communication du module d'identité de souscripteur embarqué, ou
- sélection d'un profil P1-Pn de communication indiqué dans une commande de sélection d'un profil P1-Pn de communication reçue par le module 100.

Le module 150 est en outre capable de consulter le premier registre R1 et un deuxième registre R2, ces registres R1 et R2 étant stockés dans la mémoire non volatile 130.

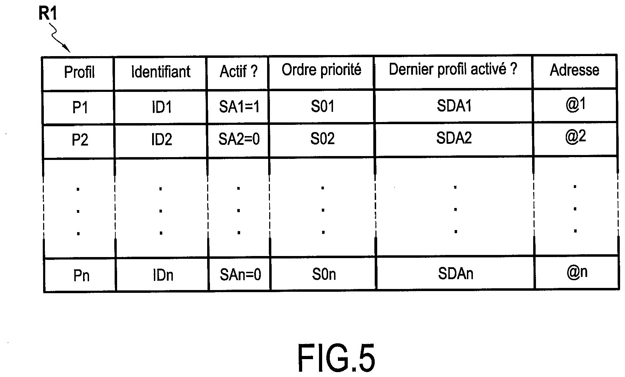

Le premier registre R1 prend par exemple la forme d'une base de données (cf. **figure 5****)** et peut comprendre par exemple en association l'élément suivant :
- un identifiant ID1-IDn du profil P1-Pn considéré ;
avec au moins un des éléments suivants :
- un statut SA1-SAn du profil P1-Pn considéré, ce statut SA1-SAn indiquant si ce profil P1-Pn est actif ou non ;
- un statut SO1-SOn du profil P1-Pn considéré, ce statut SO1-SOn indiquant un ordre de priorité de sélection de ce profil P1-Pn ;
- un statut SDA1-SD1n du profil P1-Pn considéré, ce statut SDA1-SD1n indiquant si ce profil P1-Pn est le dernier profil P1-Pn de communication activé ; et
- un pointeur vers l'adresse mémoire @1-@n du profil P1-Pn de communication considéré.

En variante, une pluralité de registres remplace le premier registre R1, chaque registre comprenant en association l'identifiant ID1-IDn avec au moins un autre des éléments précités.

Le deuxième registre R2 prend par exemple la forme d'une base de données et peut comprendre par exemple en association les éléments suivants :
- une méthode d'administration pouvant être utilisée par le module 100, et
- l'ensemble comprenant au moins une commande et/ou au moins une règle utilisé par la méthode d'administration.

Le système d'exploitation 120, et plus particulièrement le module logiciel 150, constitue un exemple de programme d'ordinateur au sens de l'invention, ce programme comportant des instructions pour l'exécution des étapes d'un procédé d'administration de cycles de vie de profil, mis en oeuvre par le module 100, selon un mode de réalisation particulier de l'invention.

La mémoire dans laquelle se trouve le système d'exploitation 120 constitue ainsi un exemple de support d'enregistrement au sens de l'invention, lisible par un processeur (non représenté) du module 100.

Le terminal 110 comporte un système d'exploitation 160 (stocké dans une mémoire morte par exemple), une mémoire non volatile 170 et une interface de communication 180 apte à communiquer avec l'interface de communication 140 du module 110.

Typiquement, la mémoire non volatile 170 est une mémoire de type « EEPROM » ou une mémoire de type « Flash ». Cette mémoire non volatile 170 comporte un troisième registre R3 pouvant être consulté par le système d'exploitation 160.

Le troisième registre R3 prend par exemple la forme d'une base de données et peut comprendre par exemple en association les éléments suivants :
- une méthode d'administration pouvant être utilisée par le terminal 110, et
- l'ensemble comprenant au moins une commande et/ou au moins une règle utilisé par la méthode d'administration.

Le système d'exploitation 160 constitue un exemple de programme d'ordinateur au sens de l'invention, ce programme comportant des instructions pour l'exécution des étapes d'un procédé d'administration de cycles de vie de profils, mis en oeuvre par le terminal 110, selon un mode de réalisation particulier de l'invention.

La mémoire dans laquelle se trouve le système d'exploitation 160 constitue ainsi un exemple de support d'enregistrement au sens de l'invention, lisible par un processeur (non représenté) du terminal 110.

Dans un exemple, le terminal 110 est un terminal de téléphonie mobile. Dans un autre exemple, le terminal 110 est un dispositif de communication apte à coopérer avec un module d'identité de souscripteur tel qu'une carte eUICC ou une carte SIM. Ce dispositif de communication peut par exemple être un objet intelligent capable de communiquer via à un réseau de télécommunications avec une autre machine (e.g. un compteur de consommation énergétique d'un bâtiment apte à communiquer au travers d'un réseau de télécommunications avec un distributeur).

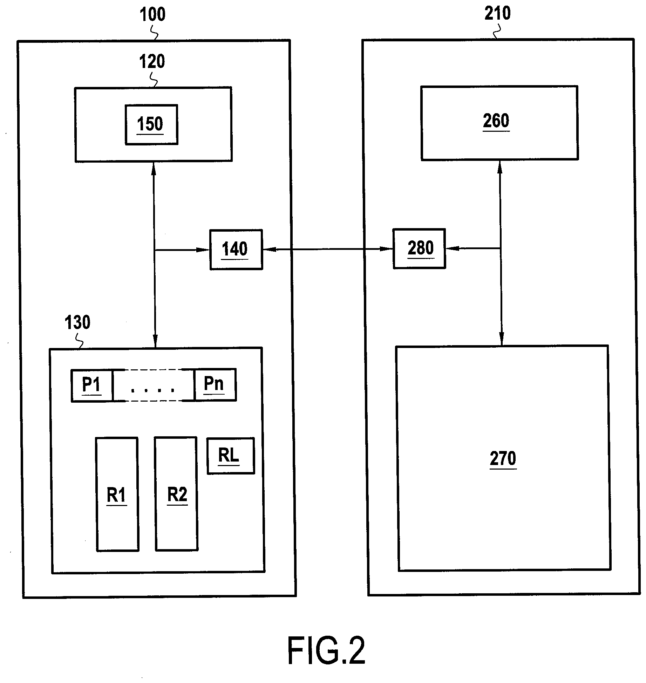

La **figure 2** représente le module 100 d'identité de souscripteur de la figure 1, ce module d'identité de souscripteur 100 étant cette fois-ci embarqué dans un terminal 210 de télécommunications classique.

Par « terminal 210 de communication classique », on entend un terminal n'étant pas apte à utiliser une méthode d'administration. Par conséquent, le terminal ne permet pas d'installer, de désinstaller, d'activer, de désactiver des profils de communication. De plus, le terminal 210 ne permet pas l'administration des fichiers des profils et le basculement d'un profil à un autre.

Le terminal 110 comporte un système d'exploitation 160, une mémoire non volatile 170 et une interface de communication 180 apte à communiquer avec l'interface de communication 140 du module 110.

Typiquement, la mémoire non volatile 170 est une mémoire de type « EEPROM » ou une mémoire de type « Flash ».

Dans un exemple, le terminal 210 est un terminal de téléphonie mobile. Dans un autre exemple, le terminal 210 est un dispositif de communication apte à coopérer avec un module d'identité de souscripteur tel qu'une carte eUICC ou une carte SIM. Ce dispositif de communication peut par exemple être un objet intelligent communiquant comme déjà expliqué ci-avant, capable de communiquer via à un réseau de télécommunications avec une autre machine (e.g. un compteur de consommation énergétique d'un bâtiment apte à communiquer au travers d'un réseau de télécommunications avec un distributeur).

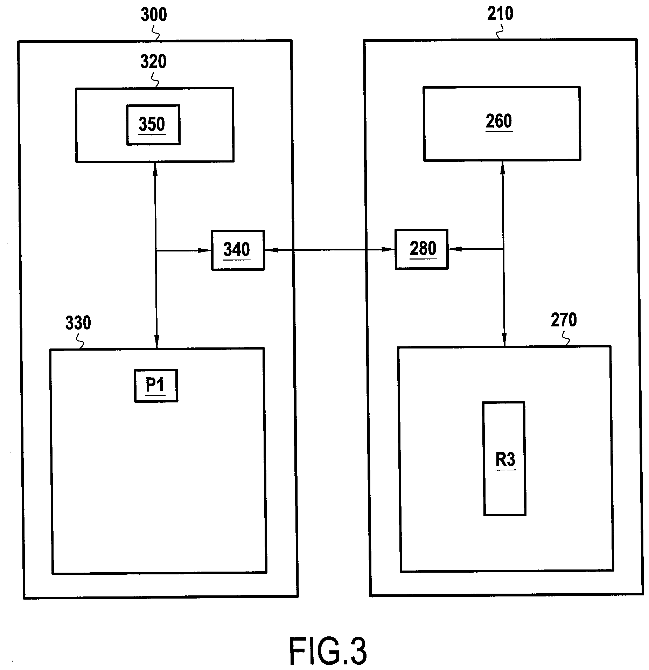

La **figure 3** représente le terminal 110 de télécommunications de la figure 1, dans lequel un module 300 d'identité de souscripteur classique est inséré.

Dans l'exemple de la figure 3, le module 300 d'identité de souscripteur est une carte SIM.

Par « module 300 d'identité de souscripteur classique », on entend un module n'étant pas apte à utiliser une méthode d'administration. Par conséquent, le module 300 ne permet pas d'installer, de désinstaller, d'activer, de désactiver des profils de communication. De plus, le module 300 ne permet pas l'administration des fichiers des profils et le basculement d'un profil à un autre.

En effet, un module d'identité de souscripteur classique ne comporte qu'un seul profil. Ce profil est défini par les données de personnalisation du module 300. Ces données peuvent comporter notamment des données de souscription (e.g. identifiants (IMSI etc.), clés cryptographiques, algorithmes (e.g. d'authentification)...).

Le module 300 comporte un système d'exploitation 320 par exemple stocké dans une mémoire morte. Le module 300 comporte en outre une mémoire non-volatile réinscriptible 330 et une interface de communication 340.

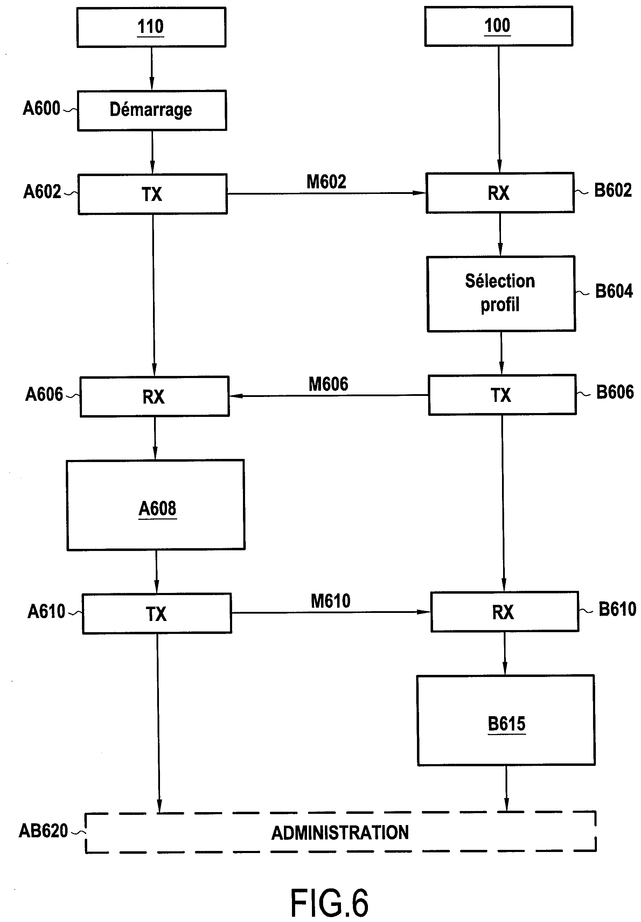

La **figure 6** montre un procédé d'administration de cycles de vie de profils mis en oeuvre par le terminal 110 de télécommunications de la figure 1 et le module 100 d'identité de souscripteur embarqué dans le terminal de la figure 1. Les étapes B602, B604, B606, B610 et B615 de ce procédé sont mises en oeuvre par le module 100, tandis que les étapes A600, A602, A606, A608 et A610 de ce procédé sont mises en oeuvre par le terminal 110. L'étape AB620 de ce procédé est mise en oeuvre par le module 100 et par le terminal 110.

La première étape A600 de ce procédé correspond au premier démarrage du terminal 110 de télécommunications, lorsque le module 100 est embarqué dans ce terminal 110.

Le terminal 110 émet (étape A602) une commande M602 de sélection d'un profil P1-Pn de communication.

Cette commande M602 de sélection peut comporter une information sur le profil P1-Pn souhaité par le terminal 110. Cette information peut être l'identifiant ID1-IDn du profil P1-Pn souhaité, un chemin pour accéder au répertoire principal MF1 ou SDF du profil P1-Pn souhaité ou un nom du répertoire principal MF1 ou SDF du profil P1-Pn souhaité. Dans un exemple, la commande M602 de sélection d'un profil de communication est conforme à la commande APDU « Select MF » définie par la section 6.11 de la norme « ISO 7816-4 ».

A la réception (étape B602) de la commande M602, le module 100 sélectionne, dans une étape B604, un profil P1-Pn de communication selon une règle de sélection prédéfinie de l'ensemble de règles RL.

Ainsi, dans un exemple, le module 100 consulte les statuts SDA1-SDAn du premier registre R1 pour déterminer le dernier profil P1-Pn ayant été activé, puis sélectionne (B604) ce dernier profil P1-Pn de communication ayant été activé.

Dans un autre exemple, le module 100 consulte les statuts SO1-SOn du premier registre R1 pour déterminer le profil P1-Pn ayant l'ordre de priorité de sélection le plus élevé et sélectionne (B604) ce profil P1-Pn prioritaire.

Dans un autre exemple, le module 100 sélectionne (B604) l'unique profil de communication compris dans ce module 100.

Dans encore un autre exemple pouvant être réalisé lorsque la commande M602 de sélection comporte une information relative au profil P1-Pn souhaité par le terminal 100, le module 100 sélectionne (B604) le profil P1-Pn de communication correspondant à cette information. Le module 100 peut alors consulter le premier registre R1.

Le module 100 est ainsi capable de sélectionner un profil P1-Pn de communication ayant un répertoire principal étant un sous-répertoire d'un répertoire commun aux profils P1-Pn comme montré par la figure 4B, ou un profil P1-Pn de communication ayant un répertoire principal n'étant pas un sous-répertoire d'un répertoire commun aux profils P1-Pn, comme montré par la figure 4A.

Ensuite, le module 100 émet, dans une étape B606, un message M606 à destination du terminal 110. Ce message M606 comporte une information relative aux capacités du module 100.

Dans un exemple, l'information relative aux capacités du module 100 comporte:
- une information sur les méthodes d'administration du cycle de vie de profils P1-Pn supportées (ou la méthode d'administration supportée) par le module 100, et/ou
- le nombre de profils P1-Pn de communication stockés dans le module 100, et/ou
- le type de système de fichiers supporté par le module 100, et/ou
- une information relative au profil P1-Pn de communication sélectionné, par exemple son identifiant ID1-IDn.

Dans un exemple, le message M606 est conforme à la commande APDU « MF FCP TLV » définie par la norme « ISO 7816-4 », qui comporte au moins un objet de type « BER-TLV » défini par la norme « ISO 7816-4 » ou par la norme « ETSI TS 102.221 ».

Ainsi, le message M606 comportant une information relative aux capacités du module 100 correspond à au moins un objet de type « BER-TLV ». L'information relative au profil sélectionné est donc incluse dans un objet de type « BER-TLV ».

Après avoir reçu (étape A606) le message M606, le terminal 110 sélectionne, dans une étape A608, ou ne sélectionne pas, un ensemble d'au moins une commande et/ou au moins une règle utilisé par une méthode d'administration.

La sélection ou la non sélection de l'ensemble est effectuée en fonction des capacités du module 100, transmises par le message M606, et de celles du terminal 110.

Typiquement, le terminal 110 déduit de l'information sur les méthodes d'administration supportées par le module 100 toutes les méthodes d'administration supportées par le module 100.

Ensuite, le terminal 110 recherche la méthode qu'il supporte (ou les méthodes qu'il supporte) parmi les méthodes supportées (ou la méthode supportée) par le module 100.

Si le terminal 110 supporte plusieurs méthodes supportées par le module 100, le terminal choisit une de ces méthodes en fonction d'une règle de sélection prédéfinie.

En outre, si le terminal 110 supporte une méthode parmi les méthodes supportées (ou l'unique méthode supportée) par le module 100, le terminal 110 choisit cette méthode.

Le terminal 110 sélectionne alors l'ensemble d'au moins une commande et/ou au moins une règle utilisé par la méthode choisie. La méthode choisie peut alors être mise en oeuvre par le terminal 110.

Si le terminal 110 ne supporte aucune des méthodes supportées (ou ne supporte pas la méthode supportée) par le module 100, le terminal 100 ne choisit pas de méthode et ne sélectionne pas d'ensemble. Le terminal 110 ne sera alors pas capable d'administrer les cycles de vie des profils P1-Pn. En variante, si le terminal 110 ne supporte aucune des méthodes supportées (ou ne supporte pas la méthode supportée) par le module 100, le terminal 110 choisit une méthode prédéfinie permettant uniquement d'administrer les fichiers du profil sélectionné.

Dans un exemple, le terminal 110 consulte le registre R3 pour déterminer s'il supporte au moins une des méthodes d'administration supportées (ou la méthode supportée) par le module 100, puis pour éventuellement sélectionner l'ensemble correspondant à la méthode choisie.

En outre, le terminal 110 émet, dans une étape A610 et à destination du module 100, un message M610 représentatif des capacités de ce terminal 110 (par exemple les capacités CAT pour « Card Application Toolkit » en terminologie anglo-saxonne). Ce message M610 peut comprendre une information sur la capacité du terminal 110 à supporter une méthode d'administration.

Plus précisément, si le terminal 110 a sélectionné, lors de l'étape A608, l'ensemble utilisé par la méthode choisie, le message M610 comprend une information sur la capacité du terminal 110 à utiliser cette méthode. Le message M610 émis par le terminal 110 comprend ainsi explicitement la capacité dudit terminal 110 à supporter la méthode choisie. En variante, le message M610 ne comprend pas une information sur la capacité du terminal 110 à utiliser la méthode choisie, et le module 100 déduit des autres capacités transmises dans le message M610 émis par le terminal 110 cette capacité dudit terminal 110 à supporter la méthode d'administration choisie.

Si le terminal 110 n'a pas sélectionné d'ensemble lors de l'étape A608, le message M610 ne comprend aucune information sur la capacité du terminal 110 à utiliser une méthode supportée par le module 100, ou comprend une information sur l'incapacité du terminal 110 à utiliser une méthode supportée par le module 100.

Dans un exemple, ce message M610 émis par le terminal 110 correspond à un message émis selon la commande APDU « Terminal Profile » définie par la norme « ETSI TS 102.221 ».

Si le message M610 comprend une information sur la capacité du terminal 110 à utiliser une méthode supportée par le module 100, le module 100 sélectionne, dans une étape B615, par exemple en consultant le registre R2, l'ensemble d'au moins une commande et/ou au moins une règle associé à cette méthode, et devant être utilisé par ce module 100. Ainsi, le module 100 sélectionne un ensemble d'au moins une commande et/ou au moins une règle en fonction des capacités du terminal 110 et du module 100. La méthode peut alors être mise en oeuvre par le module 100.

Si le message M610 ne comprend aucune information sur la capacité du terminal 110 à utiliser une méthode supportée par le module 100, ou comprend une information sur l'incapacité du terminal 110 à utiliser une méthode supportée par le module 100, le module 100 ne sélectionne pas d'ensemble. Le module 100 ne sera alors pas capable d'administrer les cycles de vie des profils P1-Pn. En variante, le module choisit la méthode prédéfinie permettant uniquement d'administrer les fichiers du profil sélectionné.

Dans une étape AB620, si le module 100 et le terminal 110 ont sélectionné un ensemble correspondant à une méthode supportée par le module 100 et le terminal 110, le module 100 et le terminal 110 administrent au moins un cycle de vie d'au moins un des profils P1-Pn en utilisant l'ensemble sélectionné. Par exemple, le profil sélectionné P1-Pn est activé par le module 150 au moyen de l'ensemble sélectionné. L'activation peut être mise en oeuvre par un changement du statut SA1-SAn du premier registre R1 listant tous les profils de communication du module 100.

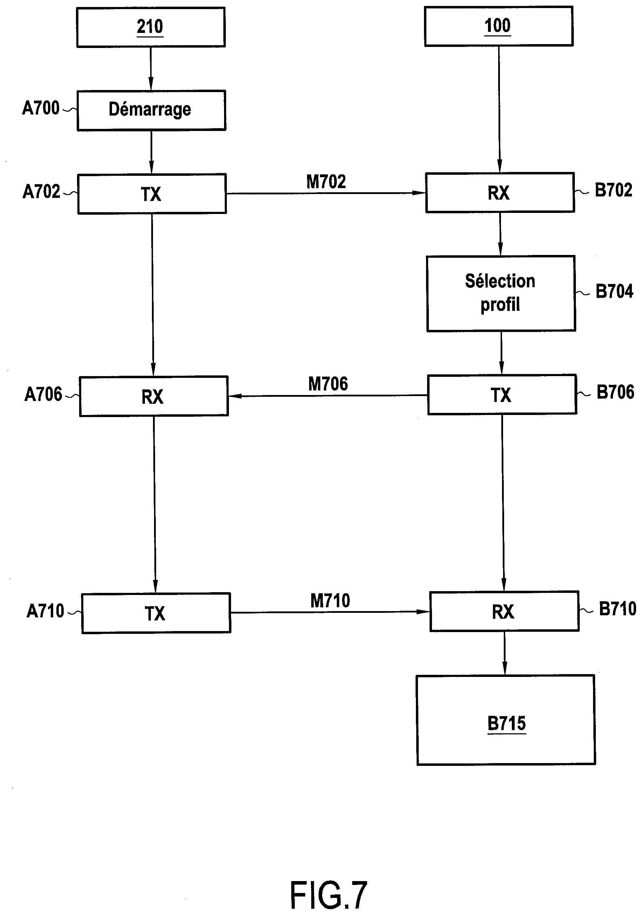

La **figure 7** montre un procédé d'administration de cycles de vie de profils mis en oeuvre par le module 100 d'identité de souscripteur et le terminal 210 de télécommunications de la figure 2.

Les étapes B702, B704, B706, B710 et B715 de ce procédé sont mises en oeuvre par le module 100, tandis que les étapes A700, A702, A706 et A710 de ce procédé sont mises en oeuvre par le terminal 210.

La première étape A700 de ce procédé correspond au premier démarrage du terminal 210 de télécommunications, lorsque le module 100 est embarqué dans ce terminal 210.

Le terminal 210 émet (étape A702) une commande M702 de sélection d'un profil P1-Pn de communication.

Dans un exemple, la commande M702 de sélection d'un profil de communication est conforme à la commande APDU « Select MF » définie par la section 6.11 de la norme « ISO 7816-4 ».

A la réception (étape B702) de la commande M702, le module 100 sélectionne, dans une étape B704, un profil P1 de communication.

Ensuite, le module 100 émet, dans une étape B706, un message M706 à destination du terminal 110. Ce message M706 comporte une information relative aux capacités du module 100.

Dans un exemple, l'information relative aux capacités du module 100 comporte:
- une information sur les méthodes d'administration du cycle de vie de profils P1-Pn supportées (ou la méthode supportée) par le module 100, et/ou
- le nombre de profils P1-Pn de communication stockés dans le module 100, et/ou
- le type de système de fichiers supporté par le module 100, et/ou
- une information relative au profil P1-Pn de communication sélectionné, par exemple son identifiant ID1-IDn ou le type de profil P1-Pn.

Dans un exemple ce message M706 est conforme à la commande APDU « MF FCP TLV » définie par la norme « ISO 7816-4 », qui comporte au moins un objet de type « BER-TLV » défini par la norme « ISO 7816-4 » ou par la norme « ETSI TS 102.221 ».

Ainsi, le message M706 comportant une information relative aux capacités du module correspond à au moins un objet de type « BER-TLV ». L'information relative aux capacités du module est donc incluse dans un objet de type « BER-TLV ».

A la réception (étape A706) du message M706, le terminal 210 ignore l'information relative au profil de communication sélectionné. En effet, le terminal 210 étant un terminal classique, il n'est pas apte à considérer et analyser cette donnée.

En outre, le terminal 110 émet, dans une étape A710 et à destination du module 100, un message M710 représentatif des capacités de ce terminal 110 (par exemple les capacités CAT pour « Card Application Toolkit » en terminologie anglo-saxonne).

Dans un exemple, ce message M710 émis par le terminal 110 correspond à un message émis selon la commande APDU « Terminal Profile » définie par la norme « ETSI TS 102.221 ».

Le terminal 210 étant un terminal classique, ce message M710 ne comprendra pas une information sur la capacité de ce terminal 210 à supporter une méthode d'administration.

Après réception du message M710, le module 100 ne sélectionne pas d'ensemble de commandes et de règles.

Plus précisément, le module 100 déduit (étape B715) de l'absence d'information sur la capacité du terminal 210 à supporter une méthode d'administration donnée que ce terminal 210 est un terminal classique pouvant pas utiliser une méthode d'administration. Le module 100 ne choisit donc pas de méthode et ne sélectionne pas d'ensemble, et les cycles de vie des profils P1-Pn ne sont alors pas administrés. En variante, le module 100 choisit une méthode prédéfinie permettant uniquement d'administrer les fichiers du profil sélectionné.

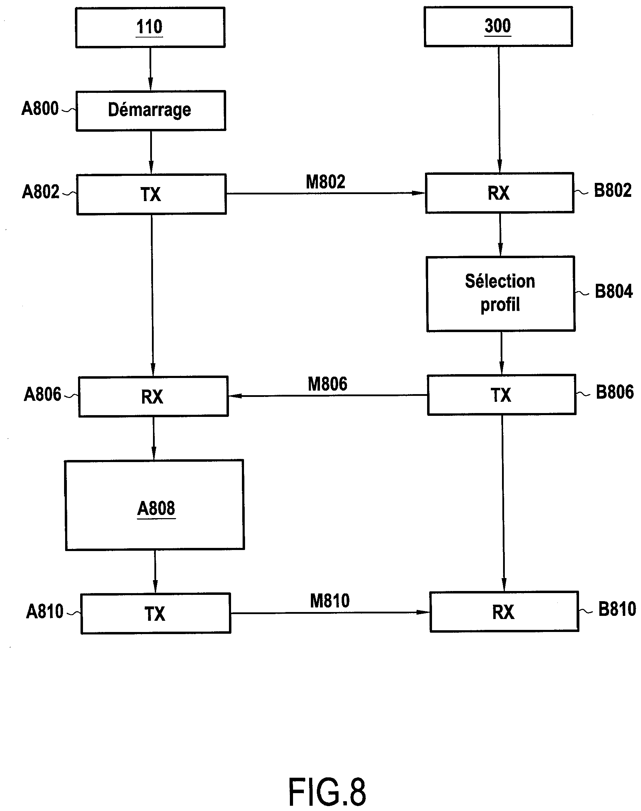

La **figure 8** montre un procédé d'administration de cycles de vie de profils mis en oeuvre par le terminal 110 de télécommunications et le module 300 d'identité de souscripteur de la figure 3. Les étapes B802, B804, B806 et B810 de ce procédé sont mises en oeuvre par le module 300, tandis que les étapes A800, A802, A806, A808 et A810 de ce procédé sont mises en oeuvre par le terminal 110.

La première étape A800 de ce procédé correspond au premier démarrage du terminal 110 de télécommunications, lorsque le module 300 est embarqué dans ce terminal 110.

Le terminal 110 émet (étape A802) une commande M802 de sélection d'un profil P1-Pn de communication.

Cette commande M802 de sélection peut comporter une information sur le profil P1-Pn souhaité par le terminal 110. Cette information peut être un identifiant ID1-IDn du profil P1-Pn souhaité, un chemin pour accéder au répertoire principal MF1 ou SDF du profil P1-Pn souhaité ou un nom du répertoire principal MF1 ou SDF du profil P1-Pn souhaité. Dans un exemple, la commande M802 de sélection d'un profil de communication est conforme à la commande APDU « Select MF » définie par la section 6.11 de la norme « ISO 7816-4 ».

A la réception (étape B802) de la commande M802, le module 300 sélectionne, dans une étape B804, l'unique « profil » P1 stocké dans la mémoire non volatile 330 de ce module 300 (c'est-à-dire les données de personnalisation).

Ensuite, le module 300 émet, dans une étape B806, un message M806 à destination du terminal 110. Ce message M806 comporte une information relative au profil P1 de communication sélectionné.

Dans un exemple, l'information relative au profil P1 sélectionné décrit les capacités de management de cycle de vie du profil.

Dans un exemple ce message M806 est conforme à la commande APDU « MF FCP TLV » définie par la norme « ISO 7816-4 », qui comporte au moins un objet de type « BER-TLV » défini par la norme « ISO 7816-4 » ou par la norme « ETSI TS 102.221 ».

Ainsi, le message M806 comportant une information relative au profil de communication sélectionné correspond à au moins un objet de type « BER-TLV ». L'information relative au profil sélectionné est donc incluse dans un objet de type « BER-TLV ».

Après avoir reçu (étape A806) le message M806, le terminal 110 déduit de l'absence d'information sur les méthodes d'administration supportées par le module 100 que le module 300 est un module classique ne pouvant pas utiliser une méthode d'administration (étape A808). Le terminal 110 ne sélectionne donc pas d'ensemble.

En outre, le terminal 110 émet, dans une étape A810 et à destination du module 300, un message M810 représentatif des capacités de ce terminal 110 (par exemple les capacités CAT pour « Card Application Toolkit » en terminologie anglo-saxonne).

Dans un exemple, ce message M810 émis par le terminal 110 correspond à un message émis selon la commande APDU « Terminal Profile » définie par la norme « ETSI TS 102.221 ». Ce message M810 comporte une information sur la capacité du terminal à supporter au moins une méthode d'administration de cycles de vie de profils.

A la réception (étape B810) du message M810, le module 300 ignore l'information sur la capacité du terminal à supporter une méthode d'administration. En effet, le module 300 étant un module classique, il n'est pas apte à considérer et analyser cette donnée. Le cycle de vie du profil P1 n'est alors pas administré.

Le procédé permet ainsi d'administrer les cycles de vie des profils uniquement lorsque le terminal et le module supportent une même méthode d'administration. Dans le cas contraire, l'administration des cycles de vie des profils n'est pas effectuée. Il n'est alors par exemple pas possible de basculer d'un profil à un autre. Ceci permet de limiter les erreurs de fonctionnement du module et/ou du terminal, car il est impossible pour ce module et ce terminal d'utiliser deux méthodes d'administration différentes, qui utilisent des commandes et/ou des règles différentes.

## Revendications

1. Procédé d'administration de cycles de vie de profils (P1-Pn) de communication, lesdits profils (P1-Pn) étant gérés par un module (100) d'identité de souscripteur embarqué dans un terminal (110, 210) de télécommunications, ledit procédé étant mis en oeuvre par ledit module (100),
chaque profil (P1-Pn) étant configuré pour permettre au terminal (110, 210) de communiquer avec un réseau de téléphonie mobile conformément audit profil (P1-Pn) de communication lorsque ledit profil (P1-Pn) de communication est actif,
ledit module (100) étant apte à utiliser au moins une méthode d'administration, ladite méthode étant apte à administrer les cycles de vie de chacun desdits profils (P1-Pn), ladite méthode utilisant un ensemble d'au moins une commande et/ou d'au moins une règle,
le procédé **caractérisé en ce qu'**il comprend les étapes de :
- réception (B610, B710) d'un message (M610, M710) émis par le terminal (110, 210) et étant représentatif des capacités dudit terminal (110, 210),
- sélection ou non sélection (B615, B715) de l'ensemble utilisé par ladite méthode, en fonction desdites capacités dudit terminal (110, 210), et
- si ledit ensemble est sélectionné, administration (AB620, AB720) d'au moins un cycle de vie d'au moins un desdits profils en utilisant ledit ensemble d'au moins une commande et/ou d'au moins une règle.

2. Procédé d'administration selon la revendication 1, dans lequel le message (M610, M710) émis par le terminal (110, 210) comprend explicitement la capacité dudit terminal (110, 210) à utiliser ladite méthode.

3. Procédé d'administration selon la revendication 1 ou 2, dans lequel l'étape de sélection ou de non sélection dudit ensemble est en outre fonction des capacités dudit module (100).

4. Procédé d'administration selon l'une des revendications 1 à 3, comprenant en outre les étapes de :
- réception (B602, B702) d'une commande (M602, M702) de sélection d'un profil (P1-Pn) émise par le terminal (110, 210), et
- sélection d'un desdits profils (P1-Pn).

5. Procédé d'administration selon la revendication 4, dans lequel ledit profil (P1-Pn) de communication est sélectionné selon une règle de sélection prédéfinie, mémorisée dans une mémoire non volatile dudit module (100).

6. Procédé d'administration selon l'une quelconque des revendications 1 à 5, comprenant en outre une étape d'émission (B606, B706) d'un message (M606, M706) au terminal (110, 210) comportant une information relative aux capacités dudit module.

7. Procédé d'administration de cycles de vie de profils (P1-Pn) de communication, lesdits profils (P1-Pn) étant supportés par un terminal (110) de télécommunications apte à coopérer avec un module (100, 300) d'identité de souscripteur embarqué ou inséré dans ledit terminal (110), ledit procédé étant mis en oeuvre par ledit terminal (110),
chaque profil (P1-Pn) étant configuré pour permettre au terminal (110) de communiquer avec un réseau de téléphonie mobile conformément audit profil (P1-Pn) de communication lorsque ledit profil (P1-Pn) de communication est actif,
ledit terminal (110) étant apte à utiliser au moins une méthode d'administration, ladite méthode étant apte à administrer les cycles de vie de chacun desdits profils, ladite méthode utilisant un ensemble d'au moins une commande et/ou d'au moins une règle,
ledit procédé **caractérisé en ce qu'**il comporte les étapes suivantes :
- émission (A610, A810) d'un message (M610, M810) représentatif des capacités dudit terminal (110) audit module (100, 300),
- réception (A606, A806) d'un message (M606, M806) comportant une information relative aux capacités dudit module (100, 300), ledit message (M606, M806) provenant dudit module (100, 300),
- sélection ou non sélection de l'ensemble utilisé par ladite méthode, en fonction de ladite information relative aux capacités dudit module (100, 300), et
- si ledit ensemble est sélectionné, administration d'au moins un cycle de vie d'au moins un desdits profils (P1-Pn) en utilisant ledit ensemble d'au moins une commande et/ou d'au moins une règle.

8. Procédé d'administration selon la revendication 7, étant mis en oeuvre au premier démarrage (A600, A800) du terminal (110) de télécommunications.

9. Procédé d'administration selon la revendication 7 ou 8, comprenant en outre l'étape de :
- émission (A602, A802) d'une commande (M602, M802) de sélection d'un profil (P1-Pn) de communication audit module (100, 300).

10. Procédé d'administration selon l'une quelconque des revendications 1 à 9, dans lequel ledit message (M610, M810) émis par le terminal (110) correspond à un message émis selon la commande APDU « Terminal Profile » définie par la norme « ETSI TS 102.221 », comportant en outre une donnée supplémentaire indiquant que le terminal (110) est apte à utiliser ladite méthode d'administration.

11. Module (100) d'identité de souscripteur embarqué dans un terminal (110, 210) de télécommunications,
ledit module étant apte à gérer une pluralité de profils (P1-Pn) de communication,
chaque profil (P1-Pn) étant configuré pour permettre au terminal (110, 210) de communiquer avec un réseau de téléphonie mobile conformément audit profil (P1-Pn) de communication lorsque ledit profil (P1-Pn) de communication est actif,
ledit module étant apte à utiliser au moins une méthode d'administration, ladite méthode étant apte à administrer les cycles de vie de chacun desdits profils (P1-Pn), ladite méthode utilisant un ensemble d'au moins une commande et/ou d'au moins une règle,
ledit module **caractérisé en ce qu'**il comprend :
- des moyens de réception d'un message (M610, M710) émis par le terminal (110, 210), ledit message (M610, M710) étant représentatif des capacités dudit terminal (110, 210), et
- des moyens de sélection ou de non sélection de l'ensemble utilisé par ladite méthode, en fonction desdites capacités dudit terminal (110, 210), et
- des moyens d'administration d'au moins un cycle de vie d'au moins un desdits profils, utilisant ledit ensemble d'au moins une commande et/ou d'au moins une règle, si ledit ensemble est sélectionné.

12. Module (100) d'identité de souscripteur selon la revendication 11, dans lequel les moyens de sélection ou de non sélection d'un ensemble sélectionnent l'ensemble en fonction en outre des capacités dudit module (100).

13. Terminal (110) de télécommunications apte à coopérer avec un module (100, 300) d'identité de souscripteur embarqué ou inséré dans ledit terminal,
ledit terminal étant apte à supporter une pluralité de profils (P1-Pn) de communication,
chaque profil (P1-Pn) étant configuré pour permettre au terminal de communiquer avec un réseau de téléphonie mobile conformément audit profil (P1-Pn) de communication lorsque ledit profil (P1-Pn) de communication est actif,
ledit terminal de télécommunications étant apte à utiliser au moins une méthode d'administration, ladite méthode étant apte à administrer les cycles de vie de chacun desdits profils, ladite méthode utilisant un ensemble d'au moins une commande et/ou d'au moins une règle,
ledit terminal **caractérisé en ce qu'**il comporte :
- des moyens d'émission d'un message (M610, M810) représentatif des capacités dudit terminal audit module (100, 300),
- des moyens de réception d'un message (M606, M806) comportant une information relative aux capacités dudit module, ledit message (M606, M806) provenant dudit module (100, 300), et
- des moyens de sélection ou de non sélection dudit ensemble utilisé par ladite méthodes, en fonction de ladite information relative aux capacités dudit module (100, 300), et
- des moyens d'administration d'au moins un cycle de vie d'au moins un desdits profils (P1-Pn), utilisant ledit ensemble d'au moins une commande et/ou d'au moins une règle, si ledit ensemble est sélectionné.

14. Programme d'ordinateur comportant des instructions pour l'exécution des étapes d'un procédé d'administration selon l'une quelconque des revendications 1 à 6 ou 7 à 10, lorsque ledit programme est exécuté par un processeur.

15. Support d'enregistrement lisible par un processeur, sur lequel est enregistré un programme d'ordinateur comprenant des instructions pour l'exécution des étapes d'un procédé d'administration selon l'une quelconque des revendications 1 à 6 ou 7 à 10.

## Patentansprüche

1. Verfahren zur Verwaltung von Lebenszyklen von Kommunikationsprofilen (P1 - Pn), wobei die Profile (P1-Pn) durch ein Subscriber-Identitätsmodul (100), das in ein Telekommunikationsendgerät (110, 210) eingebettet ist, verwaltet werden, wobei das Verfahren durch das Modul (100) durchgeführt wird,
wobei jedes Profil (P1-Pn) dazu ausgelegt ist, dem Endgerät (110, 210) zu ermöglichen, mit einem Mobiltelefonnetz entsprechend dem Kommunikationsprofil (P1-Pn) zu kommunizieren, wenn das Kommunikationsprofil (P1-Pn) aktiv ist,
wobei das Modul (100) geeignet ist, wenigstens ein Verwaltungsverfahren zu verwenden, wobei das Verfahren geeignet ist, die Lebenszyklen eines jeden der Profile (P1-Pn) zu verwalten, wobei das Verfahren eine Gesamtheit aus wenigstens einem Befehl und/oder aus wenigstens einer Regel verwendet,
Verfahren, **dadurch gekennzeichnet, dass** es die Schritte umfasst des:
- Empfangens (B610, B710) einer Mitteilung (M610, M710), die durch das Endgerät (110, 210) gesendet wird und für die Fähigkeiten des Endgerätes (110, 210) repräsentativ ist,
- Auswählens oder Nichtauswählens (B615, B715) der durch das Verfahren verwendeten Gesamtheit in Abhängigkeit von den Fähigkeiten des Endgerätes (110, 210), und,
- falls die Gesamtheit ausgewählt wird, des Verwaltens (AB620, AB720) wenigstens eines Lebenszyklus von wenigstens einem der Profile unter Verwendung der Gesamtheit aus wenigstens einem Befehl und/oder aus wenigstens einer Regel.

2. Verwaltungsverfahren nach Anspruch 1, bei dem die Mitteilung (M610, M710), die durch das Endgerät (110, 210) gesendet wird, ausdrücklich die Fähigkeit des Endgerätes (110, 210), das Verfahren zu verwenden, umfasst.

3. Verwaltungsverfahren nach Anspruch 1 oder 2, bei dem der Schritt des Auswählens oder Nichtauswählens der Gesamtheit ferner von den Fähigkeiten des Moduls (100) abhängig ist.

4. Verwaltungsverfahren nach einem der Ansprüche 1 bis 3, ferner umfassend die Schritte des:
- Empfangens (B602, B702) eines Befehls (M602, M702) zur Auswahl eines Profils (P1-Pn), der durch das Endgerät (110, 210) gesendet wird, und
- Auswählens von einem der Profile (P1-Pn).

5. Verwaltungsverfahren nach Anspruch 4, bei dem das Kommunikationsprofil (P1-Pn) entsprechend einer vordefinierten Auswahlregel, welche in einem nichtflüchtigen Speicher des Moduls (100) gespeichert ist, ausgewählt wird.

6. Verwaltungsverfahren nach einem der Ansprüche 1 bis 5, ferner umfassend einen Schritt des Sendens (B606, B706) einer Mitteilung (M606, M706) an das Endgerät (110, 210), die eine Information bezüglich der Fähigkeiten des Moduls enthält.

7. Verfahren zur Verwaltung von Lebenszyklen von Kommunikationsprofilen (P1-Pn), wobei die Profile (P1-Pn) durch ein Telekommunikationsendgerät (110) unterstützt werden, das geeignet ist, mit einem Subscriber-Identitätsmodul (100, 300), welches in das Endgerät (110) eingebettet oder eingefügt ist, zusammenzuwirken, wobei das Verfahren durch das Endgerät (110) durchgeführt wird,
wobei jedes Profil (P1-Pn) dazu ausgelegt ist, dem Endgerät (110) zu ermöglichen, mit einem Mobiltelefonnetz entsprechend dem Kommunikationsprofil (P1-Pn) zu kommunizieren, wenn das Kommunikationsprofil (P1-Pn) aktiv ist,
wobei das Endgerät (110) geeignet ist, wenigstens ein Verwaltungsverfahren zu verwenden, wobei das Verfahren geeignet ist, die Lebenszyklen eines jeden der Profile zu verwalten, wobei das Verfahren eine Gesamtheit aus wenigstens einem Befehl und/oder aus wenigstens einer Regel verwendet,
Verfahren, **dadurch gekennzeichnet, dass** es die folgenden Schritte umfasst:
- Senden (A610, A810) einer Mitteilung (M610, M810), die für die Fähigkeiten des Endgerätes (110) repräsentativ ist, an das Modul (100, 300),
- Empfangen (A606, A806) einer Mitteilung (M606, M806), die eine Information bezüglich der Fähigkeiten des Moduls (100, 300) enthält, wobei die Mitteilung (M606, M806) von dem Modul (100, 300) stammt,
- Auswählen oder Nichtauswählen der durch das Verfahren verwendeten Gesamtheit in Abhängigkeit von der Information bezüglich der Fähigkeiten des Moduls (100, 300), und,
- falls die Gesamtheit ausgewählt wird, Verwalten wenigstens eines Lebenszyklus von wenigstens einem der Profile (P1-Pn) unter Verwendung der Gesamtheit aus wenigstens einem Befehl und/oder aus wenigstens einer Regel.

8. Verwaltungsverfahren nach Anspruch 7, wobei es beim ersten Start (A600, A800) des Telekommunikationsendgerätes (110) durchgeführt wird.

9. Verwaltungsverfahren nach Anspruch 7 oder 8, ferner umfassend den Schritt des:
- Sendens (A602, A802) eines Befehls (M602, M802) zur Auswahl eines Kommunikationsprofils (P1-Pn) an das Modul (100, 300).

10. Verwaltungsverfahren nach einem der Ansprüche 1 bis 9, bei dem die Mitteilung (M610, M810), welche durch das Endgerät (110) gesendet wird, einer entsprechend dem durch die Norm "ETSI TS 102.221" definierten Befehl APDU "Terminal Profile" gesendeten Mitteilung entspricht, die ferner eine zusätzliche Angabe umfasst, die angibt, dass das Endgerät (110) geeignet ist, das Verwaltungsverfahren zu verwenden.

11. Subscriber-Identitätsmodul (100), das in ein Telekommunikationsendgerät (110, 210) eingebettet ist,
wobei das Modul geeignet ist, eine Vielzahl von Kommunikationsprofilen (P1-Pn) zu verwalten,
wobei jedes Profil (P1-Pn) dazu ausgelegt ist, dem Endgerät (110, 210) zu ermöglichen, mit einem Mobiltelefonnetz entsprechend dem Kommunikationsprofil (P1-Pn) zu kommunizieren, wenn das Kommunikationsprofil (P1-Pn) aktiv ist,
wobei das Modul geeignet ist, wenigstens ein Verwaltungsverfahren zu verwenden, wobei das Verfahren geeignet ist, die Lebenszyklen eines jeden der Profile (P1-Pn) zu verwalten, wobei das Verfahren eine Gesamtheit aus wenigstens einem Befehl und/oder aus wenigstens einer Regel verwendet,
Modul, **dadurch gekennzeichnet, dass** es umfasst:
- Mittel zum Empfangen einer Mitteilung (M610, M710), die durch das Endgerät (110, 210) gesendet wird, wobei die Mitteilung (M610, M710) für die Fähigkeiten des Endgerätes (110, 210) repräsentativ ist, und
- Mittel zum Auswählen oder Nichtauswählen der durch das Verfahren verwendeten Gesamtheit in Abhängigkeit von den Fähigkeiten des Endgerätes (110, 210), und
- Mittel zum Verwalten wenigstens eines Lebenszyklus von wenigstens einem der Profile unter Verwendung der Gesamtheit aus wenigstens einem Befehl und/oder aus wenigstens einer Regel, wenn die Gesamtheit ausgewählt wird.

12. Subscriber-Identitätsmodul (100) nach Anspruch 11, bei dem die Mittel zum Auswählen oder Nichtauswählen einer Gesamtheit die Gesamtheit ferner in Abhängigkeit von den Fähigkeiten des Moduls (100) auswählen.

13. Telekommunikationsendgerät (110), das geeignet ist, mit einem Subscriber-Identitätsmodul (100, 300), welches in das Endgerät eingebettet oder eingefügt ist, zusammenzuwirken,
wobei das Endgerät geeignet ist, eine Vielzahl von Kommunikationsprofilen (P1-Pn) zu unterstützen,
wobei jedes Profil (P1-Pn) dazu ausgelegt ist, dem Endgerät zu ermöglichen, mit einem Mobiltelefonnetz entsprechend dem Kommunikationsprofil (P1-Pn) zu kommunizieren, wenn das Kommunikationsprofil (P1-Pn) aktiv ist,
wobei das Telekommunikationsendgerät geeignet ist, wenigstens ein Verwaltungsverfahren zu verwenden, wobei das Verfahren geeignet ist, die Lebenszyklen eines jeden der Profile zu verwalten, wobei das Verfahren eine Gesamtheit aus wenigstens einem Befehl und/oder aus wenigstens einer Regel verwendet,
Endgerät, **dadurch gekennzeichnet, dass** es umfasst:
- Mittel zum Senden einer Mitteilung (M610, M810), die für die Fähigkeiten des Endgerätes repräsentativ ist, an das Modul (100, 300),
- Mittel zum Empfangen einer Mitteilung (M606, M806), die eine Information bezüglich der Fähigkeiten des Moduls enthält, wobei die Mitteilung (M606, M806) von dem Modul (100, 300) stammt, und
- Mittel zum Auswählen oder Nichtauswählen der durch das Verfahren verwendeten Gesamtheit in Abhängigkeit von der Information bezüglich der Fähigkeiten des Moduls (100, 300), und
- Mittel zum Verwalten wenigstens eines Lebenszyklus von wenigstens einem der Profile (P1-Pn) unter Verwendung der Gesamtheit aus wenigstens einem Befehl und/oder aus wenigstens einer Regel, wenn die Gesamtheit ausgewählt wird.

14. Computerprogramm, umfassend Befehle für die Durchführung der Schritte eines Verwaltungsverfahrens nach einem der Ansprüche 1 bis 6 oder 7 bis 10, wenn das Programm durch einen Prozessor ausgeführt wird.

15. Durch einen Prozessor lesbarer Aufzeichnungsträger, auf dem ein Computerprogramm gespeichert ist, das Befehle für die Durchführung der Schritte eines Verwaltungsverfahrens nach einem der Ansprüche 1 bis 6 oder 7 bis 10 umfasst.

## Claims

1. An administering method for administering life cycles of communication profiles (P1-Pn), said profiles (P1-Pn) being managed by a subscriber identity module (100) embedded in a telecommunications terminal (110, 210), said method being performed by said module (100),
each profile (P1-Pn) being configured to enable the terminal (110, 210) to communicate with a mobile telephone network in compliance with said communication profile (P1-Pn) when said communication profile (P1-Pn) is active,
said module (100) being suitable for using at least one process of administering, said process being suitable for administering the life cycles of each of said profiles said process using a set of at least one command and/or at least one rule,
the method being **characterized in that** it comprises the steps of:
• receiving (B610, B710) a message (M610, M710) issued by the terminal (110, 210) and representative of the capabilities of said terminal (110, 210);
• selecting or not selecting (B615, B715) the set used by said process as a function of said capabilities of said terminal (110, 210); and
• if said set is selected, administering (AB620, AB720) at least one life cycle of at least one of said profiles by using said set of at least one command and/or of at least one rule.

2. An administering method according to claim 1, wherein the message (M610, M710) issued by the terminal (110, 210) includes explicitly the capability of said terminal (110, 210) to use said process.

3. An administering method according to claim 1 or claim 2, wherein the step of selecting or not selecting said set is also a function of the capabilities of said module (100) .

4. An administering method according to any one of claims 1 to 3, further comprising the steps of:
• receiving (B602, B702) a command (M602, M702) for selecting a profile (P1-Pn) as issued by the terminal (110, 210); and
• selecting one of said profiles (P1-Pn).

5. An administering method according to claim 4, wherein said communication profile (P1-Pn) is selected depending on a predefined selection rule stored in a non-volatile memory of said module (100).

6. An administering method according to any one of claims 1 to 5, further including a step of issuing (B606, B706) a message (M606, M706) to the terminal (110, 210) including information about the capabilities of said module.

7. An administering method for administering life cycles of communication profiles (P1-Pn), said profiles (P1-Pn) being supported by a telecommunications terminal (110) suitable for co-operating with a subscriber identity module (100, 300) embedded or inserted in said terminal (110), said method being performed by said terminal (110),
each profile (P1-Pn) being configured to enable the terminal (110) to communicate with a mobile telephone network in compliance with said communication profile (P1-Pn) when said communication profile (P1-Pn) is active,
said terminal (110) being suitable for using at least one process of administering, said process being suitable for administering the life cycles of each of said profiles, said process using a set of at least one command and/or of at least one rule,
said method being **characterized in that** it comprises the following steps:
• issuing (A610, A810) a message (M610, M810) representative of the capabilities of said terminal (110) to said module (100, 300);
• receiving (A606, A806) a message (M606, M806) including information about the capabilities of said module (100, 300), said message (M606, M806) coming from said module (100, 300);
• selecting or not selecting the set used by said process as a function of said information the capabilities of said module (100, 300); and
• if said set is selected, administering at least one life cycle of at least one of said profiles (P1-Pn) by using said set of at least one command and/or of at least one rule.

8. An administering method according to claim 7, that is performed the first time the telecommunications terminal (110) is started (A600, A800).

9. An administering method according to claim 7 or claim 11, further comprising the step of:
• issuing (A602, A802) a command (M602, M802) for selecting a communication profile (P1-Pn) to said module (100, 300).

10. An administering method according to any one of claims 1 to 9, wherein said message (M610, M810) issued by the terminal (110) corresponds to a message issued using the "terminal profile" APDU command defined by the ESTI TS 102.221 standard, further including additional data specifying that the terminal (110) is suitable for using said process of administering.

11. A subscriber identity module (100) embedded in a telecommunications terminal (110, 210),
said module being suitable for managing a plurality of communication profiles
each profile (P1-Pn) being configured to enable the terminal (110, 210) to communicate with a mobile telephone network in compliance with said communication profile (P1-Pn) when said communication profile (P1-Pn) is active,
said module being suitable for using at least one process of administering, said process being suitable for administering the life cycles of each of said profiles said process using a set of at least one command and/or at least one rule,
said module being **characterized in that** it comprises:
• means for receiving a message (M610, M710) issued by the terminal (110, 210), said message (M610, M710) being representative of the capabilities of said terminal (110, 210); and
• means for selecting or not selecting the set used by said process, as a function of said capabilities of said terminal (110, 210); and
• means for administering at least one life cycle of at least one of said profiles, using said set of at least one command and/or of at least one rule, if said set is selected.

12. A subscriber identity module (100) according to claim 11, wherein the means for selecting or not selecting a set select the set as a function also of the capabilities of said module (100).

13. A telecommunications terminal (110) suitable for co-operating with a subscriber identity module (100, 300) embedded or inserted in said terminal,
said terminal being suitable for supporting a plurality of communication profiles
each profile (P1-Pn) being configured to allow the terminal to communicate with a mobile telephone network in compliance with said communication profile (P1-Pn) when said communication profile (P1-Pn) is active,
said telecommunications terminal being suitable for using at least one process of administering, said process being suitable for administering the life cycles of each of said profiles, said process using a set of at least one command and/or of at least one rule,
said terminal being **characterized in that** it comprises:
• means for sending a message (M610, M810) representative of the capabilities of said terminal to said module (100, 300);
• means for receiving a message (M606, M806) including information about the capabilities of said module, said message (M606, M806) coming from said module (100, 300); and
• means for selecting or not selecting said set used by said process as a function of said information about the capabilities of said module (100, 300); and
• means for administering at least one life cycle of at least one of said profiles (P1-Pn) by using said set of at least one command and/or of at least one rule, if said set is selected.

14. A computer program including instructions for executing steps of an administering method according to any one of claims 1 to 6 or 7 to 10, when said program is executed by a processor.

15. A processor-readable data medium storing a computer program including instructions for executing steps of an administering method according to any one of claims 1 to 6 or 7 to 10.
